# EUROPÄISCHE PATENTANMELDUNG

(11) **EP 2 285 078 A2**
(43) Veröffentlichungstag der Anmeldung: **16.02.2011**
(21) Anmeldenummer: 10181864.9
(22) Anmeldetag: 22.08.2003
(51) Int. Cl.: H04M 1/725, H04M 1/2745, H04L 29/06, H04L 29/08, H04W 8/18

(54) **Mobilfunkendgerät mit Kommunikationspartnerauswahl**

(30) Priorität: 06.09.2002 DE 10241809
(62) Teilanmeldung aus: 03794924.5
(71) Anmelder: Vodafone Holding GmbH, 40213 Düsseldorf (DE)
(72) Erfinder: Boye, Juliana, 40477, Düsseldorf (DE); Klüber, Thomas, 52072, Aachen (DE); Lango, Clemens, 40882, Ratingen (DE)
(74) Vertreter: Weisse, Renate

(57) **Zusammenfassung**

Die Erfindung betrifft ein Mobilfunkendgerät für Mobilfunknetze, z.B. GSM- und UMTS-Funknetze, welches Datenenverarbeitungsmittel, insbesondere zur Verarbeitung von Daten von Kommunikationspartnern aufweist, wobei die Datenverarbeitungsmittel einen Prozessor, Speichereinheiten, eine Anzeige, sowie eine Anwenderschnittstelle aufweisen. Das Mobilfunkendgerät enthält ferner Identifikationsmittel zum Identifizieren des Mobilfunkendgeräts in dem Mobilfunknetz, eine Signaleinrichtung zum Signalisieren, ob das Mobilfunkendgerät im Mobilfunknetz online ist und eine Erfassungseinheit, die Kommunikationspartner erfaßt, welche im Mobilfunknetz online sind. Das Mobilfunkendgerät verfügt über eine Art Telefonbuch bzw. eine Auswahlliste (10) bevorzugter Kommunikationspartner. Es sind Mittel vorgesehen um die Reihenfolge der Kommunikationspartner nach vorbestimmten Kriterien automatisch zu sortieren, mit welcher sie auf der Anzeige dargestellt werden.

## Beschreibung

### Technisches Gebiet

Die Erfindung betrifft ein Mobilfunkendgerät für Mobilfunknetze, z.B. GSM- und UMTS-Funknetze, enthaltend;
(a) Datenenverarbeitungsmittel, insbesondere zur Verarbeitung von Daten von Kommunikationspartnern, wobei die Datenverarbeitungsmittel
   - einen Prozessor,
   - Speichereinheiten,
   - eine Anzeige und
   - eine Anwenderschnittstelle aufweisen,
(b) Identifikationsmittel zum Identifizieren des Mobilfunkendgeräts in dem Mubilfunknetz.
(c) eine Signaleinrichtung zum Signalisieren, ob das Mobilfunkendgerät im Mobilfunknetz online ist,
(d) eine Erfassungscinhcit, die Kommunikationspartner erfaßt, welche im Mobilfunknetz online sind,
(e) eine Auswahlliste bevorzugter Kommunikationsparther.

### Stand der Technik

Solche Mobilfunkendgeräte werden in Mobilfunknetzen bereits zahlreich verwendet. Die Mobilfunkendgeräte arbeiten mittlerweile fast alle auf digitaler Basis. Sie benötigen daher Datenenverarbeitungsmittel zur Verarbeitung der anfallenden Daten, insbesondere die von Kommunikationspartnern. Grundsätzlich erfolgt die Datenverarbeitung dann über einen Prozessor (CPU), der die Daten in geeigneten Speichereinheiten ablegt. Zur Darstellung von Daten weisen die Mobilfunkendgeräte eine Anzeige auf Die Bedienung des Mobilfunkendgeräts erfolgt üblicherweise über eine alphanumerische Tastatur bzw. Zehner-Tastatur mit optionaler Buchstabenfunktion oder über ein Mikrophon der Anwenderschnittstelle.

Jedes Mobilfunkcndgerät, welches in einem Funknetz beispielsweise nach dem GSM-Standard (Global System Mobile) verwendet wird, muß sich dort identifizieren. Dies ist notwendig, um selbst im Funknetz erkannt zu werden und anwählbar zu sein. Die Identitizierung erfolgt über eine individuelle SIM-Karte, die normalerweise vom Funknetzanbieter ausgegeben werden.

Wenn ein Mobilfunkendgerät eingeschaltet wird, wird es im Funknetz beim Netzwerkbetreiber angemeldet. Dieser Vorgang wird mit "Einbuchen" bezeichnet. Ein Mobilfunkendgerät muß sich auch einbuchen, wenn es von einem fremden Mobilfunknetz oder aus einem Funkloch kommt. In diesem Zustand gilt es quasi als ausgeschaltet. Solange das Mobilfunkendgerät eingeschaltet ist, ist es "online". Sobald das Mobilfunkendgerät ausgeschaltet ist, wird es aus dem Funknetz ausgebucht. Der Betreiber weiß nun, daß das Mobilfunkendgerät "offline" ist. Der Funknetzwerkbetreibcr kann die Zustände "online" und offline" jederzeit feststellen und gibt diese Information an andere Kommunikationsteilnehmer auch weiter. Es ist bekannt, daß diese Mittel in den Mobilfunkendgecäten und Mobilfunknetzen bereits vorgesehen sind.

Fast jedes Mobilfunkendgerät besitzt eine Auswahlliste bevorzugter Kommunikationspartner in Form eines Telefonbuches mit den Namen und Telefonnummern von gespeicherten Kommunikationspartnern. Der Anwender des Mobilfunkendgeräts kann auf diese Weise in dem Telefonbuch "blättern", um mit dem gewünschten Konununikationspartner zu kommunizieren. Oft sind die Telefonlisten sehr lang, so daß der Anwender sich erst durch zahlreiche Namen durcharbeiten muß, bis er den Kommunikationspartner gefunden hat, mit dem er kommunizieren möchte. Dies wird zudem durch die kleine Anzeige der Mobilfunkendgcrätc erschwert.

Schließlich weiß der Anwender immer noch nicht, ob der Kommunikationspartner sein Gerät "online" oder "offline" hat, also erreichbar ist. Um diese lange Liste einzuschränken werden bei einigen Geräten nur die Kommunikationspartner angezeigt, welche online sind. Die Information, ob ein Kommunikationspartner online ist, wird vom Mobilfunknetzbetreiber bereitgestellt. Das Mobilfunkendgerät wertet diese Information aus und sortiert das Telefonbuch danach. Nachteil bei diesen Auswahllisten ist, daß es auch hier zu sehr langen Listen kommen kann, da oft die Mobilfunkendgeräte ununterbrochen "online" sind.

Aus dem Bereich der Vernetzung von Personal Computern (PC), insbesondere des Internets sind Anwendungen vorhanden, bei denen festgestellt wird, ob ein möglicher Kommunikationspartner sich "online" im Netzwerk befindet. Eine Liste der sich im Netz befindlichen Kommunikationspartner kann angezeigt werden, um denjenigen auszuwählen, mit dem Kontakt aufgenommen werden soll, um beispielsweise mit diesem im Dialog zu kommunizieren (chatten). Hierbei kann sich der Anwender eine Liste bzw. eine Art "Teletonbuch" von den Kontaktpersonen anlegen, mit denen er überhaupt kommunizieren möchte. Diese Liste wird auch als "Best-Friend-Liste" bezeichnet.

Problem ist, das die Auswahllisten wegen vieler geschäftlicher und privater Kontakte schnell und unübersichtlich anwachsen. Das Durchblättern dieser Listen zum Auffinden der Nummer einer bestimmten Kontaktperson nimmt zudem unnötige Zeit in Anspruch. Bei einem Monitor mag dies vielleicht noch akzeptabel sein. Bei der klein dimensionierten Anzeige und Tastatur eines Mobilfunkcndgeräts ist das Suchen in langen Auswahllisten jedoch nicht anwenderfreundlich.

### Offenbarung der Erfindung

Aufgabe der Erfindung ist es daher, die Nachteile des Standes der Technik zu beseitigen und ein Mobilfunkendgerät zu schaffen, bei dem die sichtbare Auswahlliste für die Kommunikationspartner eingeschränkt wird, um möglichst schnell den gewünschten Kommunikationspartner zu erhalten.

Erfindungsgemäß wird die Aufgabe dadurch gelöst, daß bei einem Mobilfunkcndgcrät für Mobilfunknetze der eingangs genannten Art
(f) Auswahlmittel vorgesehen sind, die bevorzugte Kommunikationspartner der Auswahlliste nach bevorzugten Kriterien auf der Anzeige darstellen, wobei die Kriterien durch den Anwender des Mobilfunkendgeräts aus einer Kriterienliste festlegbar sind.

Durch diese Maßnahme wird gegenüber dem Stand der Technik erzielt, daß bereits beim Erzeugen eines Telefonbuchs eine Reihenfolge festgelegt werden kann, wie die Kommunikationspartner auf der Anzeige zu erscheinen haben. Die Reihenfolge kann sich dabei auch dynamisch verändern. Diese Reihenfolge der anzuzeigenden Kommunikationspartner wird anhand einer Kriterienliste automatisch eingestellt. Die Kriterienliste wird dazu zuvor angelegt. Ein Kriterium könnte beispielsweise die Häufigkeit sein, mit der untereinander kommuniziert wird. Dies wäre ein dynamisches Kriterium, da sich die Auswahlliste der Teilnehmer ständig ändern kann. Es gehört ebenfalls zur Erfindung, daß die Reihenfolge nach Kombinationen aus verschiedenen Kriterien gebildet wird. Eine Kombination wäre beispielsweise gegeben, wenn der Kommunikationspartner zum einen sehr häufig über das Mobilfunkengerät kommuniziert und gleichzeitig einer bestimmten Firma angehört. Dann wird er auf der Anzeige dargestellt. Weiterhin läßt sich eine statische Kriterienliste für die Reihenfolge erstellen, indem jedem Kommunikationspartner der Auswahllist bzw. des Telefonbuchs eine individuelle Priorität zugeordnet wird, mit der sie dargestellt werden. Die Priorität kann dann, in einer bevorzugten Ausbildung der Erfindung, über eine Gewichtung, für den Anwender einstellbar, ausgebildet sein.

Eine vorteilhafte Ausgestaltung des erfindungsgemäßen Mobilfunkendgeräts ergibt sich ferner dadurch, daß diejenigen Kommunikationspartner der Auswahlliste auf der Anzeige dargestellt werden, deren Mobilfunkendgeräte jeweils signalisieren, daß sie online sind. Damit werden diejenigen gespeicherten Teilnehmer bereits nicht berücksichtigt, die nicht erreichbar sind. Die Auswahlliste wird durch diese Maßnahme bereits eingeschränkt. Vorteilhafterweise werden nur Kommunikationspartner der Auswahlliste in der Anzeige dargestellt werden, die online sind. Wegen der geringen Größe der Anzeige lassen sich so bereits weitere potentielle Kommunikationspartner ausschließen.

Oft möchte der Anwender des Mobilfunkendgeräts einen Teilnehmer lediglich speichern. Er möchte diesen Teilnehmer aber nicht zugleich automatisch auf der Anzeige dargestellt haben. Ein Aspekt der Erfindung ist es daher die Priorität von Kommunikationspartnern so zu setzen, daß der oder die Kommunikationspartner nie automatisch auf der Anzeige dargestellt werden.

Eine weitere mögliche Variante der Erfindung besteht darin, das Mobilfunkendgerät derart auszubilden, daß ein Kommunikationspartner der Auswahlliste über eine Festnetzanlage mit dem Mobilfunkendgerät kommunizieren kann. Dabei sollte das Mobilfunknetz eine Signaieinhchtung aufweist, welche dem Mobilfunkendgerät mitteilt, daß der Kommunikationspartner online ist. Auf diese Weise können auch Festnetzteilnehmer problemlos über das Mobilfunkendgerät kommunizieren.

Vorzugsweise wird die Auswahlliste ganz oder teilweise unmittelbar in der Erfassungseinheit des Mobilfunkendgeräts bearbeitet. Eine Variante dazu besteht darin, das die Auswahlliste ganz oder teilweise auch zentral in einem Zentralrechner eines Mobil funknetzwerkanbieters bearbeitet wird.

Um die Auswahlliste ggf. systcmunabhängig zu machen kann die Auswahlliste ganz oder teilweise auf einer SIM-Karte gespeichert werden. Auf diese Weise kann die SIM-Kartc mit der Auswahlliste in verschiedenen Mvbilfunlcendgeräten verwendet werden.

Weitere Vorteile ergeben sich aus dem Gegenstand der Unteransprüche.

### Kurze Beschreibung der Zeichnung

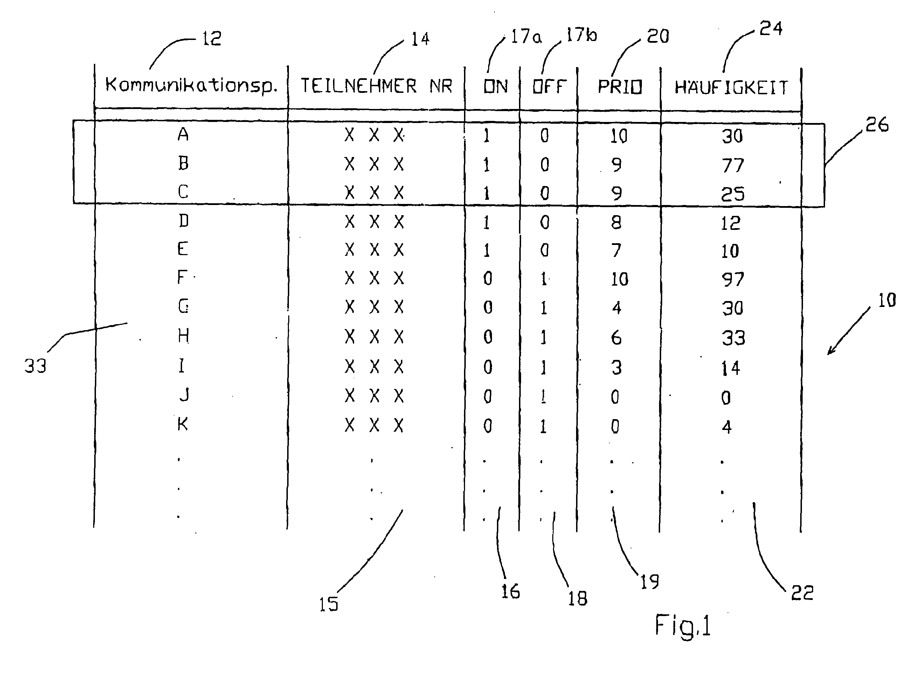

- Fig. 1: zeigt in einer Prinzipskizze eine Auswahlliste für Kommunikationspartner mit einstellbaren Auswahlkriterien.

### Bevorzugtes Ausführungsbeispiel

In Fig. 1 wird in einer Prinzipskizze eine Auswahlliste 10 für Kommunikationspartner 12 dargestellt. Eine solche Auswahlliste ist in digitaler Form in einem Speicher, welcher beispielsweise auf der SIM-Karte liegt, eines nicht dargestellten Mobilfunkendgeräts gespeichert und wird dazu verwendet, nach bestimmten Kriterien, automatisch Kommunikationspartner 12 auf einer Anzeige 26 darzustellen. Die Auswahlliste 10 wird dazu in bekannter Weise von einem Prozessor abgearbeitet. Die Kommunikationspartner 12 werden als Synonym für jeden einzelnen in dieser Abbildung fortlaufend alphabetisch in einer ersten Spalte 13 dargestellt. Jedem Teilnehmer A, B, C... wird analog zu einem herkömmlichen Telefonbuch eine individuelle Teilnehmemummer 14 zugeordnet, die der Einfachheit halber mit "XXX" bezeichnet wird und in einer zweiten Spalte 15 dargestellt ist.

In einer dritten Spalte 16 wird festgehalten, ob ein Kommunikationspartner 12 "online" 17a (ON) ist. Entsprechend wird in einer vierten Spalte 18 der Zustand gespeichert, wenn der Kommunikationspartner "oftline" 17b (OFF) ist, d.h. sein Mobilfunkendgerät nicht eingeschaltet hat oder z.B. sich in einem Bereich befindet der durch das Mobitfunknetz nicht abgedeckt wird.

Jedem Kommunikationspatner 12 ist ferner in Spalte 19 eine Priorität 20 zugeordnet. Je höher der Wert ist, desto höher ist seine Priorität. Ein Kommunikationspartner, dessen Priorität auf Null gesetzt ist, wie es im vorliegenden Ausführungsbeispiel bei den Kommunikationspartnern "J" und "K" der Fall ist, soll schließlich überhaupt nicht angezeigt werden.

In Spalte 22 wird als zusätzliches Kriterium die Häufigkeit 24 eines Kommunikationsaufbaus mit einem Kommunikationspartner 12 gespeichert. Während es sich bei der Häufigkeit 24 und bei der Frage, ob ein Teilnehmer "online" oder "offline ist, um dynamische Kriterien handelt, wird die Priorität 20 einmal festgelegt und kann von dem Anwender nur manuell wieder geändert werden. Hierbei handelt es sich um ein statisches Kriterium.

Die Auswahlliste 10 wird durch einen Prozessor nach den vorgegebenen Kriterien sortiert und verarbeitet, so daß die ersten drei Kommunikationspartner 12 auf einer Anzeige 26 des Mobilfunkendgeräts dargestellt werden. Jedes der Kriterien kann ggf. noch für die Erstellung der Reihenfolge unterschiedlich gewichtet werden. Im vorliegenden Ausführungsbeispiel genießt das Kriterium, ob ein Kommunikationspartner 12 "online" 17a oder "offline" 17b ist, die höchste Gewichtung. Danach folgt die Priorität die der Anwender für den Kommunikationspartner gesetzt hat. Die geringste Gewichtung geniest im vorliegenden Beispiel die Häufigkeit 24 des Kommunikationsaufbaus.

## Patentansprüche

1. Mobilfunkendgcrät für Mobilfunknetze, z.B. GSM- und UMTS-Funknetze, enthaltend:
(a) Datenenverarbeitungsmitte, insbesondere zur Verarbeitung von Daten von Kommunikationspartnern wobei die Datenverarbeitungsmittel
- einen Prozessor,
- Speichereinheiten,
- eine Anzeige und
- eine Anwendcrschnittstellc aufweisen,
(b) Identifikationsmittel zum Identifizieren des Mobilfunkendgeräts in dem Mobilfunknetz,
(c) eine Signaleinrichtung zum Signalisieren, ob das Mobilfunkendgerät im Moblilfunknetz online ist,
(d) eine Erfassungseinheit, die Kommunikationspartner erfaßt, welche im Mobilfunknetz online sind,
(e) eine Auswahlliste (10) bevorzugter Kommunikationspartner,
**dadurch gekennzeichnet, daß**
(f) Auswahlmittel vorgesehen sind, die bevorzugte Kommunikationspartner (12) der Auswahlliste (10) nach bevorzugten Kriterien (17, 19, 20, 24) auf der Anzeige (26) darstellen, wobei die Kriterien (17a, 17b, 20, 24) durch den Anwender des Mobilfunkendgeräts aus einer Kriterienliste (16, 18, 19, 22) festlegbar sind.

2. Mobilfunkendgerät für Mobilfunknetze nach Anspruch 1, **dadurch gekennzeichnet, daß** diejenigen Kommunikationspartner (12) der Auswahlliste (10) auf der Anzeige (26) dargestellt werden, deren Mobilfunkendgeräte jeweils signalisieren; daß sie online (17a) sind.

3. Mobilfunkendgerät für Mobilfunknetze nach einem der Ansprüche 1 oder 2, **dadurch gekennzeichnet, daß** nur Kommunikationspartner (12) der Auswahlliste (10) in der Anzeige (26) dargestellt werden, die online (17a) sind.

4. Mobilfunkendgerät nach einem der Ansprüche 1 bis 3, **dadurch gekennzeichnet, daß** Kommunikationspartnern (12) der Auswahlliste (10) eine unterschiedliche Priorität (20) zugeordnet wird, mit der sie dargestellt werden.

5. Mobilfunkendgerät tür Mobilfunknetze nach Anspruch 4, **dadurch gekennzeichnet, daß** die Priorität (20) über eine Gewichtung für den Anwender einstellbar ausgebildet ist.

6. Mobilfunkendgerat für Mobilfunknetze nach einem der Ansprüche 4 oder 5, **dadurch gekennzeichnet, daß** die Priorität (20) von Kommunikationspartnern (12) so gesetzt werden kann, daß die Kommunikationspartner (12) nie automatisch auf der Anzeige (26) dargestellt werden.

7. Mobilfunkendgerät für Mobilfunknetze nach einem der Ansprüche 1 bis 6, **dadurch gekennzeichnet, daß** ein Kommunikationspartner (12) der Auswahlliste (10) über eine Festnetzanlage mit dem Mobilfunkendgerät kommuniziert, wobei das Mobilfunknetz eine Signaleinrichtung aufweist, welche dem Mobilfunkendgerät mitteilt, daß der Kommunkationspartner online (17a) ist.

8. Mobilfunkendgerät für Mobilfunknetze nach einem der Ansprüche 1 bis 7, **dadurch gekenntzeichnet, daß** die Auswahlliste (10) ganz oder teilweise zentral in einer Verarbeitungseinheit eines Mobilfunknetzes bearbeitet wird.

9. Mobilfunkendgerät für Mobilfunknetze nach einem der Ansprüche 1 bis 8, **dadurch gekennzeichnet, daß** die Auswahlliste (10) ganz oder teilweise in dem Mobilfunkendgerät bearbeitet wird.

10. Mobilfunkendgerät für Mobilfunknetze nach einem der Ansprüche 1 bis 9, **dadurch gekennzeichnet, daß** die Auswahlliste (10) auf einer SIM-Karte gespeichert wird.
